# EUROPEAN PATENT APPLICATION

(11) **EP 3 819 019 A1**
(43) Date of publication of application: **12.05.2021**
(21) Application number: 19207793.1
(22) Date of filing: 07.11.2019
(51) Int. Cl.: B01D 61/02, B01D 61/04, B01D 65/08, C02F 1/44, C02F 1/66, F28C 1/00, F28F 19/00, F28F 25/00, F28F 25/02

(54) **USE OF CARBON DIOXIDE FOR PH REGULATION WITHIN THE REVERSE OSMOSIS PROCESS**

(71) Applicant: L'AIR LIQUIDE, SOCIETE ANONYME POUR L'ETUDE ET L'EXPLOITATION DES PROCEDES GEORGES CLAUDE, 75007 Paris (FR); Air Liquide UK Limited, Birmingham B46 1JY (GB)
(72) Inventor: Mc Nicholas, Paul, Birmingham, West Midlands B46 1JY (GB)
(74) Representative: Air Liquide

(57) **Abstract**

A process for purifying a feed fluid using a membrane according to the reverse osmosis method, during which mineral acids are added to the feed fluid before its entrance inside the membrane unit, whereby all or part of said acids is replaced with an injection of CO₂ gas.

## Description

The present invention relates to the process of Reverse Osmosis.

Reverse Osmosis is a process for purifying water using a membrane to remove ionic and organic impurities from a water supply to produce a purified water stream (permeate), while the impurities are collected in a waste stream (concentrate). During this process, sparingly soluble salts may be precipitated on the membrane leading to flow reduction due to fouling and this is mitigated by using mineral acids - typically sulphuric acid- to reduce the pH value of the feed and avoid such deposits.

The use of such mineral acids presents well known drawbacks in terms of safety, of increase in conductivity and salinity etc....

According to the present invention, it is proposed to replace the strong mineral acids used in the state of the art processes with CO₂ gas, injected inside the feed water to lower the feed water pH.

The present invention deals therefore with a process for purifying a feed fluid using a membrane according to the reverse osmosis method, during which mineral acids are added to the feed fluid before its entrance inside the membrane unit, whereby said acid is replaced with an injection of CO₂ gas.

On the other hand, another aim of the present invention is to bring a solution to the following problem.
As it is well known, industrial processes may be required to dissipate heat and this is frequently done by using a cooling tower.
Depending on the quality of the water used to supply the cooling tower there may be a greater or lesser tendency to form scale on heat exchange surfaces as a consequence of the presence of sparingly soluble salts - which in the case of calcium salts also have an inverse solubility coefficient, meaning that their solubility decreases with increased water temperature. To avoid scaling, mineral acids, to reduce the cooling water pH value, along with inhibitors may be used in order to minimise the quantity of cooling water required to be put to waste by the cooling tower bleedoff (water with concentrated mineral salts).
The addition of acids is generally performed inside the cooling tower basin.

The present invention proposes therefore to replace the mineral acid(s) used in this application with carbon dioxide, CO₂ being added to the permeate which is returned to the cooling tower sump from a reverse osmosis unit installed on the cooling circuit blowdown line), providing the following benefits over the current practice in the case of recovery of cooling tower blowdown water:
- Carbon Dioxide will reduce the cooling tower bleed-off, which is feed-water to the Reverse Osmosis unit, (for example close to a pH value of 8.3) and also mitigate deposition of sparing soluble salts within the membrane.
- Unlike mineral acids, carbon dioxide will pass through the membrane and be retained in the purified permeate stream and be available to reduce the permeate pH value.
   The purified permeate stream may be then returned (recirculation) to the cooling tower in order (i.e this purified stream is added to the cooling tower sump) to recover this blowdown water and to lower the cooling tower pH value to prevent scaling within the heat exchange equipment of the cooling tower circuit.

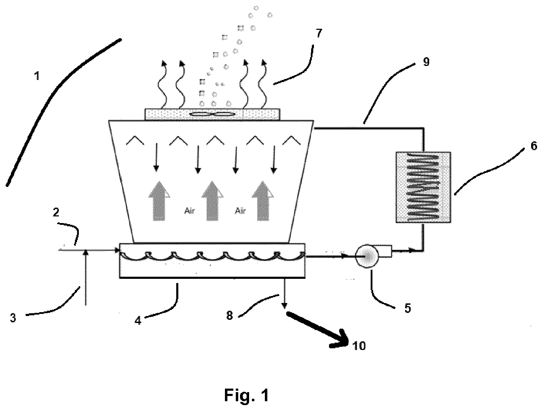

The present invention and its advantages will be better understood in the light of the non limiting example below, reference being made to the figure 1 attached.

The reference 1 designates a cooling tower, the reference 6 designates a process requiring cooling.
The water to be cooled (9) is supplied at the top of the tower, water going down by gravity and undergoing a heat exchange with an air current circulating countercurrent from the bottom to the top of the tower.
A part of the water evaporates (7).
The cold water is collected in the bath 4 located at the bottom of the tower.

A makeup water flow (2) is added to the tower to compensate for the losses caused by the evaporation.

According to the invention, the cooling tower bleed-off (blowdown) 8 is routed to the feed entrance of a Reverse Osmosis membrane (10), the purified permeate stream of the membrane being then returned (recirculation) to the cooling tower in order to recover this blowdown water and to lower the cooling tower pH value to prevent scaling within the heat exchange equipment of the cooling tower circuit and to reduce the quantity of make up water required.

## Claims

1. A process for purifying a feed fluid using a membrane according to the Reverse Osmosis (RO) method, during which mineral acids are added to the feed fluid before its entrance inside the membrane unit, whereby all or part of said acids is replaced with an injection of CO₂ gas.

2. A process according to claim 1, whereby said feed fluid is constituted by the bleed-off (8) fluid produced by a cooling tower (1).

3. A process according to claim 2, whereby the bleed off fluid (8) is directed to the Reverse Osmosis unit and whereby before entering the unit CO₂ gas is injected in order to reduce the feed water pH value inside a required range.

4. A process according to claim 2 or 3, whereby after the Reverse Osmosis unit, the purified water (permeate) containing the dissolved CO2, is fed back to the cooling tower, either into the make up water feed line (3) or the cooling tower sump (4).
